(19) Europäisches Patentamt
European Patent Office
Office européen des brevets

(11) **EP 4 484 456 A1**

(12) **EUROPEAN PATENT APPLICATION**

(43) Date of publication:
**01.01.2025 Bulletin 2025/01**

(21) Application number: 23181507.7

(22) Date of filing: **26.06.2023**

(51) International Patent Classification (IPC):
*C08F 210/06* (2006.01)    *C08L 23/14* (2006.01)

(52) Cooperative Patent Classification (CPC):
(C-Sets available)
**C08F 210/06; C08L 23/14;** C08L 2205/025  (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **Wang, Jingbo**
**4021 Linz (AT)**
• **Gahleitner, Markus**
**4021 Linz (AT)**
• **Friedrich, Karlheinz**
**2320 Schwechat (AT)**
• **Leskinen, Pauli**
**06101 Porvoo (FI)**

(74) Representative: **Kador & Partner Part mbB**
**Corneliusstraße 15**
**80469 München (DE)**

(54) **HETEROPHASIC POLYPROPYLENE COMPOSITION**

(57)    The present invention relates to a heterophasic polypropylene composition having excellent balance between mechanical and optical properties. In particular, the present invention relates to a heterophasic polypropylene composition comprising a propylene copolymer (A) matrix of propylene with ethylene and 1-butene comonomer units and a propylene ethylene elastomer (B) dispersed within the matrix. Further, the present invention also relates to a preparation process for the heterophasic polypropylene composition in the presence of a Ziegler-Natta catalyst, and to articles comprising the heterophasic polypropylene composition as well as to the use of the heterophasic polypropylene composition for the manufacture of articles.

**EP 4 484 456 A1**

(52) Cooperative Patent Classification (CPC): (Cont.)

C-Sets
**C08F 210/06, C08F 2/001;**
**C08F 210/06, C08F 4/6492;**
**C08F 210/06, C08F 4/651;**
**C08F 210/06, C08F 4/6546;**
**C08F 210/06, C08F 210/08, C08F 210/16,**
**C08F 2500/12, C08F 2500/17, C08F 2500/26,**
**C08F 2500/27, C08F 2500/30, C08F 2500/31,**
**C08F 2500/33, C08F 2500/34, C08F 2500/35,**
**C08F 2500/36, C08F 2500/39;**
**C08F 210/06, C08F 210/08, C08F 210/16,**
**C08F 2500/12, C08F 2500/27, C08F 2500/35,**
**C08F 2500/36;**
**C08L 23/14, C08L 23/14**

**Description**

The present invention relates to a heterophasic polypropylene composition having excellent balance between mechanical and optical properties. In particular, the present invention relates to a heterophasic polypropylene composition comprising a propylene copolymer (A) matrix of propylene with ethylene and 1-butene comonomer units and a propylene ethylene elastomer (B) dispersed within the matrix. Further, the present invention also relates to a preparation process for the heterophasic polypropylene composition in the presence of a Ziegler-Natta catalyst, and to articles comprising the heterophasic polypropylene composition as well as to the use of the heterophasic polypropylene composition for the manufacture of articles.

**Background**

Plastic packaging is widely used in daily life due to its good cost/performance balance. Polyolefin polymers based on polypropylene and/or polyethylene are often used in these applications. For adjusting the properties of these polymers, other comonomers of higher alpha-olefins, such as 1-butene and 1-hexene, are employed. Employment of such kind of higher alpha-olefins allows for excellent flexibility in improving the properties of choice in the final polymer.

Heterophasic propylene copolymers are often used in packaging applications due to their good balance of properties. For example, EP-A-3126411 describes a heterophasic propylene copolymer comprising a matrix being a propylene - $C_4$ to $C_{12}$ alpha-olefin and a propylene ethylene elastomer as the dispersed phase. This heterophasic propylene polymer is prepared using a single-site solid particulate catalyst. Although some of the exemplified polymers have good mechanical properties, their haze may still need improvement.

In order to fulfill the different requirements of packaging applications, a good balance between mechanical and optical properties is of high importance. Moreover, properties such as dart drop impact and seal initiation temperature are also important in films prepared from the polymers in order to suffice the requirements of packaging applications.

**Object of the invention**

It is thus an object of the present invention to provide new polypropylene compositions, which can offer good balance between mechanical and optical properties. In particular, polypropylene compositions for application in the packaging field, such as molded articles or films, are desired.

Further, polypropylene compositions which can offer these properties with a low number of different components are highly desirable, as less complex polymer compositions can easily be subjected to recycling processes after use.

**Summary of the invention**

It has been surprisingly found that the above-described object can be achieved by a heterophasic polypropylene composition comprising a propylene copolymer (A) matrix of propylene with ethylene and 1-butene comonomer units and a propylene ethylene elastomer (B) dispersed within the matrix, the heterophasic polypropylene composition comprising:

a) 55 to 85 wt.-%, based on the total weight of the heterophasic polypropylene composition and determined at 25 °C according to ISO 16152, of a xylene insoluble fraction (XI) comprising propylene comonomer units and, based on the total weight of the xylene insoluble fraction (XI), ethylene comonomer units in a content in the range of from 0.5 to 3.0 wt.-% and 1-butene comonomer units in a content in the range of from 5.0 to 10.0 wt.-%, and

b) 15 to 45 wt.-%, based on the total weight of the heterophasic polypropylene composition and determined at 25 °C according to ISO 16152, of a xylene soluble fraction (XS) comprising propylene comonomer units and, based on the total weight of the xylene soluble fraction (XS), ethylene comonomer units in a content in the range of from 18.0 to 50.0 wt.-% and 1-butene comonomer units in a content in the range of from 1.0 to 10.0 wt.-%, and the xylene soluble fraction (XS) having an intrinsic viscosity IV, determined according to ISO 1628-1 & 3, in the range of from 1.2 to 3.0 dl/g; and

wherein the content of 1-butene comonomer units, based on the total weight of the respective fraction (XI or XS), is more than 3.0 wt.-% higher in the xylene insoluble fraction (XI) compared to the xylene soluble fraction (XS), and wherein the heterophasic polypropylene composition has:

i.) a melt flow rate $MFR_2$ (230 °C), determined according to ISO 1133, in the range of from 0.5 to 5.0 g/10 min, and

ii.) a melting temperature $T_m$, determined according to differential scanning calorimetry (DSC) described in the specification, in the range of from 125 to 145 °C.

Based on the particular selection of the comonomers and their contents in the xylene insoluble fraction (XI) and the xylene soluble fraction (XS), polymers with the described good balance of properties are obtained.

Further, it has been found that the above-described object is achieved by a process for the preparation of the heterophasic polypropylene composition by a multi-stage polymerization process, comprising

I.) preparing a first propylene polymer fraction (A1) being a propylene copolymer of propylene with ethylene comonomer units and 1-butene comonomer units in a bulk phase reactor, preferably a loop reactor, in a first polymerization stage in the presence of a Ziegler-Natta catalyst;

II.) transferring the first propylene polymer fraction (A1) to a second polymerization stage and preparing a second propylene polymer fraction (A2) being a propylene copolymer of propylene with ethylene comonomer units and 1-butene comonomer units in the presence of a Ziegler-Natta catalyst in a first gas phase reactor (GPR1); and wherein the first propylene polymer fraction (A1) and the second propylene polymer fraction (A2) together form a propylene copolymer (A); and

III.) transferring the propylene copolymer (A) to a third polymerization stage and preparing a propylene ethylene elastomer (B) as a third propylene polymer fraction in the presence of a Ziegler-Natta catalyst in a second gas phase reactor (GPR2), to obtain a heterophasic polypropylene composition.

The use of a Ziegler-Natta catalyst in the claimed process further allows to obtain the desired properties. By using new generations of this catalyst, employment of phthalate compounds can be avoided, and the risk of contamination of the final products with phthalate can be minimized.

Articles, preferably films and molded articles, comprising the heterophasic polypropylene composition, as well as the use of the heterophasic polypropylene composition for the manufacture of the respective articles allow to provide articles with the good properties. These articles are characterized by the desired balance between mechanical and optical properties, and further comprise satisfying sealing properties.

## Description of the invention

### *Heterophasic polypropylene composition*

The present invention relates to a heterophasic polypropylene composition.

The heterophasic polypropylene composition according to the present invention comprises or consists of a propylene copolymer (A) matrix of propylene with ethylene and 1-butene comonomer units and a propylene ethylene elastomer (B) dispersed within the matrix. Thus, the heterophasic polypropylene composition is a terpolymer of propylene, ethylene and 1-butene.

The term '*heterophasic polypropylene composition*' as used herein means that at least two distinct phases are present in the composition, i.e., a propylene copolymer (A) and a propylene ethylene elastomer (B). The propylene copolymer (A) forms a crystalline matrix of the heterophasic polypropylene composition and the propylene ethylene elastomer (B) is dispersed in the crystalline matrix. Presence of the distinct phases is easily detectable via DSC analysis: the crystalline matrix propylene copolymer (A) will show a melting point higher than that of the propylene ethylene elastomer (B).

The term '*propylene copolymer*' as used herein denotes a polymer comprising, based on the total weight of the polymer, at least 50 wt.-% of propylene monomer units and further alpha-olefin comonomer units different from propylene.

The wording '*alpha-olefin*' units (e.g., propylene, ethylene, 1-butene units etc.) as used herein for contents of the polymer is to be understood to teach these units for preparing the polymer. The resultant polymer contains the respective units derived from these alpha-olefin monomer units.

Unless otherwise indicated, percentages throughout this disclosure are percentages by weight (wt.-%) based on the total weight of the respectively described enclosing entity.

The heterophasic polypropylene composition comprises from 55 to 85 wt.-%, preferably from 60 to 83 wt.-% and more preferably from 65 to 80 wt.-%, based on the total weight of the heterophasic polypropylene composition and determined at 25 °C according to ISO 16152, of a xylene insoluble fraction (XI). In one embodiment, the heterophasic polypropylene composition comprises from 65 to 85 wt.-% of a xylene insoluble fraction (XI).

The xylene insoluble fraction (XI) comprises propylene comonomer units and, based on the total weight of the xylene insoluble fraction (XI), ethylene comonomer units in a content in the range of from 0.5 to 3.0 wt.-%, preferably from 0.5 to 2.5 wt.-% and more preferably from 0.5 to 2.0 wt.-%, and 1-butene comonomer units in a content in the range of from 5.0 to 10.0 wt.-%, preferably from 5.5 to 9.0 wt.-% and more preferably from 6.0 to 8.5 wt.-%.

Generally, the xylene insoluble fraction (XI) comprises a higher content of the propylene copolymer (A).

Preferably, the xylene insoluble fraction (XI) comprises the propylene copolymer (A) in a content of at least 70 wt.-%, more preferably at least 80 wt.-% and up to 100 wt.-% of, based on the total weight of the xylene insoluble fraction (XI).

The heterophasic polypropylene composition comprises from 15 to 45 wt.-%, preferably from 17 to 40 wt.-% and more preferably from 20 to 35 wt.-%, based on the total weight of the heterophasic polypropylene composition and determined at 25 °C according to ISO 16152, of a xylene soluble fraction (XS). In one embodiment, the heterophasic polypropylene composition comprises from 15 to 35 wt.-% of a xylene soluble fraction (XS).

Preferably, the xylene insoluble fraction (XI) and the xylene soluble fraction (XS) add up to 100 wt.-% of the propylene polymer content of the heterophasic polypropylene composition. More preferably, they add up to 100 wt.-% of the entire polymer content of the heterophasic polypropylene composition. However, it is to be understood that additives may additionally be present in the heterophasic polypropylene composition as defined below.

Thus, preferably, the heterophasic polypropylene composition consists of the xylene insoluble fraction (XI) and the xylene soluble fraction (XS) and optional additives.

The xylene soluble fraction (XS) comprises propylene comonomer units and, based on the total weight of the xylene soluble fraction (XS), ethylene comonomer units in a content in the range of from 18.0 to 50.0 wt.-%, preferably from 20.0 to 40.0 wt.-% and more preferably from 22.0 to 30.0 wt.-%, and 1-butene comonomer units in a content in the range of from 1.0 to 10.0 wt.-%, preferably from 1.5 to 8.0 wt.-% and more preferably from 2.0 to 6.0 wt.-%.

Preferably, the xylene soluble fraction (XS) comprises, based on the total weight of the xylene soluble fraction (XS), a total content of comonomer units of 1-butene and ethylene in the range of from 19.0 to 60.0 wt.-%, more preferably from 21.5 to 48.0 wt.-% and most preferably from 24.0 to 36.0 wt.-%.

Generally, the xylene soluble fraction (XS) comprises the propylene ethylene elastomer (B). Preferably, the xylene soluble fraction (XS) comprises the propylene ethylene elastomer (B) in a content of at least 50 wt.-%, more preferably at least 60 wt.-% and up to 100 wt.-% of, based on the total weight of the xylene soluble fraction (XS).

The xylene soluble fraction (XS) has an intrinsic viscosity IV, determined according to ISO 1628-1 & 3, in the range of from 1.2 to 3.0 dl/g, preferably from 1.4 to 2.8 dl/g and more preferably from 1.5 to 2.6 dl/g.

The heterophasic polypropylene composition is further characterized by the difference of the contents of 1-butene comonomer units between the xylene insoluble fraction (XI) and the xylene soluble fraction (XS). Accordingly, the content of 1-butene comonomer units, based on the total weight of the respective fraction (XI or XS), is more than 3.0 wt.-%, preferably more than 3.5 wt.-% and more preferably more than 4.0 wt.-%, higher in the xylene insoluble fraction (XI) compared to the xylene soluble fraction (XS). Preferably, this difference is less than 10.0 wt.-%.

For example, if the content of 1-butene comonomer units in the xylene soluble fraction (XS) is 2.0 wt.-%, based on the total weight of the xylene soluble fraction (XS), the content of 1-butene comonomer units in the xylene insoluble fraction (XI) is more than 5.0 wt.-%, based on the total weight of the xylene insoluble fraction (XI).

The heterophasic polypropylene composition has a melt flow rate $MFR_2$ (230 °C), determined according to ISO 1133, in the range of from 0.5 to 5.0 g/10 min, preferably from 0.7 to 4.0 g/10 min and more preferably from 1.0 to 3.5 g/10 min.

The heterophasic polypropylene composition has a melting temperature $T_m$, determined according to differential scanning calorimetry (DSC) described herein, in the range of from 125 to 145 °C, preferably from 128 to 143 °C and more preferably from 130 to 140 °C.

Preferably, the heterophasic polypropylene composition has a crystallization temperature $T_c$, determined according to differential scanning calorimetry (DSC) described herein, in the range of from 90 to 100 °C, more preferably from 91 to 99 °C and most preferably from 92 to 98 °C.

Preferably, the heterophasic polypropylene composition comprises, based on the total weight of the heterophasic polypropylene composition and determined by $^{13}$C-NMR spectroscopy, a content of 1-butene comonomer units in the range of from 3.0 to 14.0 wt.-%, more preferably from 4.0 to 12.0 wt.-% and most preferably from 5.0 to 10.0 wt.-%.

Preferably, the heterophasic polypropylene composition comprises, based on the total weight of the heterophasic polypropylene composition and determined by $^{13}$C-NMR spectroscopy, a content of ethylene comonomer units in the range of from 3.0 to 15.0 wt.-%, more preferably from 4.0 to 13.0 wt.-% and most preferably from 5.0 to 11.5 wt.-%.

Preferably, propylene, 1-butene and ethylene are the only monomers present in the heterophasic polypropylene composition. It is preferred that the heterophasic polypropylene composition is substantially free of units derived from other alpha-olefin monomers (i.e., $C_5$ to Ca alpha-olefin monomers), e.g., it comprises less than 0.10 wt.-%, preferably less than 0.05 wt.-%, and more preferably less than 0.01 wt.-% of other alpha-olefin monomers such as $C_5$ to $C_8$ alpha-olefin monomer units.

The comonomer contents in the heterophasic polypropylene composition, the xylene soluble fraction (XS) and xylene insoluble fraction (XI) and in the propylene copolymers are determined by $^{13}$C-NMR spectroscopy, as described in the method section.

The heterophasic polypropylene composition is preferably obtained by a polymerization process using a Ziegler-Natta catalyst. Preferably, the heterophasic polypropylene composition is produced using a Ziegler-Natta catalyst according to the preferred embodiments as described with respect to the preparation of the heterophasic polypropylene composition herein.

Preferably, the heterophasic polypropylene composition is free of phthalic acid esters and their respective decomposition products.

The heterophasic polypropylene composition is characterized by good mechanical properties.

Preferably, the heterophasic polypropylene composition has a flexural modulus, determined according to ISO 178, in the range of from 250 to 500 MPa, more preferably from 260 to 470 MPa and most preferably from 270 to 450 MPa.

Preferably, the heterophasic polypropylene composition has an impact strength at +23 °C, determined according to ISO 179/1eA, in the range of from 30.0 to 100.0 kJ/m$^2$, more preferably from 35.0 to 97.0 kJ/m$^2$ and most preferably from 40.0 to 95.0 kJ/m$^2$.

Further preferably the heterophasic polypropylene composition has an impact strength at -20 °C, determined according to ISO 179/1eA, in the range of from 1.5 to 7.0 kJ/m$^2$, more preferably from 1.6 to 6.5 kJ/m$^2$ and most preferably from 1.7 to 6.0 kJ/m$^2$.

Preferably, the propylene copolymer (A) and the propylene ethylene elastomer (B) are the only propylene polymer components in the heterophasic polypropylene composition.

The weight ratio of the propylene ethylene elastomer (B) to the propylene copolymer (A) in the heterophasic polypropylene composition is preferably in the range of from 5:95 to 40:60, more preferably from 7:93 to 35:65 and most preferably from 10:90 to 30:70.

It is to be understood herein that the heterophasic polypropylene composition may comprise further components such as additives, which may optionally be added in a mixture with or without a carrier polymer (e.g., in a master batch).

Suitable additives include fillers, lubricants, processing aids, antioxidants, UV absorbers, light stabilizers, nucleating agents, foaming or blowing agents, clarifiers and pigments.

The additives may be present in a content in the range of from 0.1 to 10.0 wt.- %, preferably from 0.3 to 5.0 wt.-% and more preferably from 0.5 to 3.0 wt.-%, based on the total weight of the heterophasic polypropylene composition.

### *Propylene copolymer (A)*

The propylene copolymer (A) forms the crystalline matrix of the heterophasic polypropylene composition. The propylene copolymer (A) is a copolymer of propylene with 1-butene comonomer units and ethylene comonomer units.

Preferably, the propylene copolymer (A) has, based on the total weight of the propylene copolymer (A), a content of 1-butene comonomer units in the range of from 4.0 to 15.0 wt.-%, more preferably from 4.5 to 12.0 wt.-% and most preferably from 5.0 to 10.0 wt.-%, and a content of ethylene comonomer units in the range of from 0.5 to 2.5 wt.-%, more preferably from 0.7 to 2.4 wt.-% and most preferably from 1.0 to 2.3 wt.-%.

Preferably, propylene, 1-butene and ethylene are the only comonomers present in the propylene copolymer (A). It is preferred that the propylene copolymer (A) is substantially free of units derived from other alpha-olefin monomers (i.e., $C_5$ to $C_8$ alpha-olefin monomers), e.g., it comprises less than 0.10 wt.-%, preferably less than 0.05 wt.-%, and more preferably less than 0.01 wt.-% of other alpha-olefin monomers such as $C_5$ to $C_8$ alpha-olefin monomer units.

The propylene copolymer (A) is preferably a multimodal polymer. The term '*multimodal polymer*' as used herein denotes a polymer composition comprising at least two polymer fractions, which have been produced under different polymerization conditions resulting in different (weight average) molecular weights and/or molecular weight distributions for the fractions and/or different comonomer contents. The prefix '*multi*' relates to the number of different polymer fractions the polymer consists of. The term '*multimodal polymer*' comprises bimodal, trimodal, tetramodal etc. polymers.

More preferably, the propylene copolymer (A) is a bimodal polymer, i.e., it consists of or comprises two different polymer fractions, i.e., the first propylene polymer fraction (A1) and the second propylene polymer fraction (A2).

Preferably, the first propylene polymer fraction (A1) and the second propylene polymer fraction (A2) are prepared in an order of subsequent polymerization stages.

Preferably, the propylene copolymer (A) comprises, or consists of, from 30 to 70 wt.-%, based on the total weight of the propylene copolymer (A), of a first propylene polymer fraction (A1) being a propylene copolymer of propylene with ethylene comonomer units and 1-butene comonomer units, and from 30 to 70 wt.-%, based on the total weight of the propylene copolymer (A), of a second propylene polymer fraction (A2), being a propylene copolymer of propylene with ethylene comonomer units and 1-butene comonomer units.

In other words, the weight ratio of the first propylene polymer fraction (A1) to the second propylene polymer fraction (A2) in the propylene copolymer (A) is preferably in the range of from 30:70 to 70:30, more preferably from 35:65 to 65:35 and most preferably from 40:60 to 60:40.

The second propylene polymer fraction (A2) is different from the first propylene polymer fraction (A1). Preferably, the second propylene polymer fraction (A2) has a higher total content of comonomers than the first propylene polymer fraction (A1). More preferably, the second propylene polymer fraction (A2) has a higher content of ethylene comonomer units and 1-butene comonomer units than the first propylene polymer fraction (A1).

Preferably, the propylene copolymer (A) has a molecular weight distribution $M_w/M_n$, being the ratio of the weight average molecular weight $M_w$ and the number average molecular weight $M_n$, in the range of from 3.0 to 10.0, more preferably from 4.0 to 8.0 and most preferably 5.5 to 7.0.

The propylene copolymer (A) preferably has a melt flow rate $MFR_2$ (230 °C), determined according to ISO 1133, in the range of from 0.3 to 6.0 g/10 min, more preferably from 0.5 to 4.5 g/10 min and most preferably from 0.7 to 3.0 g/10 min.

### First propylene polymer fraction (A1)

The first propylene polymer fraction (A1) of the propylene copolymer (A) preferably consists of a single propylene polymer.

The propylene polymer of the first propylene polymer fraction (A1) preferably is a propylene copolymer of propylene with 1-butene comonomer units and ethylene comonomer units.

Preferably, the first propylene polymer fraction (A1) has, based on the total weight of the first propylene polymer fraction (A1), a content of 1-butene comonomer units in the range of from 2.0 to 10.0 wt.-%, more preferably from 3.0 to 8.0 wt.-% and most preferably from 3.5 to 7.5 wt.-%, and a content of ethylene comonomer units in the range of from 0.1 to 2.0 wt.-%, more preferably from 0.5 to 1.8 wt.-%, still more preferably from 0.7 to 1.5 wt.-%.

The first propylene polymer fraction (A1) preferably has a melt flow rate $MFR_2$ (230 °C), determined according to ISO 1133, in the range of from 0.2 to 5.0 g/10 min, more preferably from 0.4 to 3.5 g/10 min and most preferably from 0.5 to 3.0 g/10 min.

### Second propylene polymer fraction (A2)

The second propylene polymer fraction (A2) of the propylene copolymer (A) preferably consists of a single propylene polymer.

The propylene polymer of the second propylene polymer fraction (A2) preferably is a propylene copolymer of propylene with 1-butene comonomer units and ethylene comonomer units.

The second propylene polymer fraction (A2) preferably has a melt flow rate $MFR_2$ (230 °C), determined according to ISO 1133, in the range of from 0.1 to 10.0 g/10 min, more preferably from 0.3 to 5.0 g/10 min and most preferably from 0.5 to 3.0 g/10 min.

The $MFR_2$ of the second propylene polymer fraction (A2), produced in the second polymerization stage is determined according to equation (1):

$$\log(MFR\ (A2)) = \frac{\log(MFR\ (A)) - w(A1) * \log(MFR(A1))}{w(A2)} \quad \text{equation (1)}$$

wherein

MFR(A) is the $MFR_2$ of the propylene copolymer (A)

w(A1) and w(A2) are the weight fractions of the propylene polymer fractions (A1) and (A2) in the propylene copolymer (A)

MFR(A1) is the $MFR_2$ of the propylene polymer fraction (A1) produced in the first step.

Respectively adapted equations may be used to determine the parameters of the second propylene polymer fraction (A2) or of polymers prepared in further polymerization stages of a preparation process.

### Propylene ethylene elastomer (B)

The heterophasic polypropylene composition further comprises a propylene ethylene elastomer (B). The propylene ethylene elastomer (B) forms the dispersed phase that is dispersed in the crystalline matrix.

The propylene ethylene elastomer (B) is a copolymer of propylene and ethylene. Preferably, the ethylene content in the propylene ethylene elastomer (B), based on the total weight of the propylene ethylene elastomer (B), is in the range of from 20 to 60 wt.-%, more preferably from 22 to 50 wt.-% and most preferably from 25 to 45 wt.-%. The ethylene content is determined by $^{13}$C-NMR spectroscopy, as described in the method section.

The propylene ethylene elastomer (B) may comprise 1-butene comonomer units. The content of 1-butene comonomer units in the propylene ethylene elastomer (B) is preferably in the range of from 0 to 5.0 wt.-%. Preferably, the propylene ethylene elastomer (B) does not contain 1-butene comonomer units.

Preferably, propylene and ethylene and optionally 1-butene are the only monomers present in the propylene ethylene elastomer (B). It is preferred that propylene ethylene elastomer (B) is substantially free of units derived from other alpha-olefin monomers (i.e., $C_5$ to $C_8$ alpha-olefin monomers), e.g., it comprises less than 0.10 wt.-%, preferably less than 0.05 wt.-%, and more preferably less than 0.01 wt.-% of other alpha-olefin monomers such as $C_5$ to $C_8$ alpha-olefin monomer units.

Preferably, the propylene ethylene elastomer (B) has a molecular weight distribution $M_w/M_n$, being the ratio of the weight average molecular weight $M_w$ and the number average molecular weight $M_n$, in the range of from 3.0 to 10.0, more preferably from 4.0 to 8.0 and most preferably 5.5 to 7.0.

### *Preparation of the heterophasic polypropylene composition*

The heterophasic polypropylene composition according to the present invention may be prepared by any known process in the art. Ideally, a process is used which produces a homogenous mixture of the various components. Typically, compounding is employed. Compounding usually involves mixing or/and blending the various components in a molten state, often by extrusion.

Preferably, the heterophasic polypropylene composition is produced in a multi-stage process wherein the propylene polymers are produced in an order of subsequent stages.

In a preferred embodiment, the heterophasic polypropylene composition in any of the above-described embodiments is prepared by a multi-stage polymerization process, comprising

I.) preparing a first propylene polymer fraction (A1) being a propylene copolymer of propylene with ethylene comonomer units and 1-butene comonomer units in a bulk phase reactor, preferably a loop reactor, in a first polymerization stage in the presence of a Ziegler-Natta catalyst;

II.) transferring the first propylene polymer fraction (A1) to a second polymerization stage and preparing a second propylene polymer fraction (A2) being a propylene copolymer of propylene with ethylene comonomer units and 1-butene comonomer units in the presence of a Ziegler-Natta catalyst in a first gas phase reactor (GPR1); and wherein the first propylene polymer fraction (A1) and the second propylene polymer fraction (A2) together form a propylene copolymer (A); and

III.) transferring the propylene copolymer (A) to a third polymerization stage and preparing a propylene ethylene elastomer (B) as a third propylene polymer fraction in the presence of a Ziegler-Natta catalyst in a second gas phase reactor (GPR2), to obtain a heterophasic polypropylene composition.

The present invention also relates to a process for the preparation of a heterophasic polypropylene composition by a multi-stage polymerization process, comprising the above-described steps I.), II.) and III.). The process may lead to a heterophasic polypropylene composition in any of the above-described embodiments.

Accordingly, in step I.) of the process, propylene, 1-butene and ethylene are fed into the bulk phase reactor to prepare the first propylene polymer fraction (A1).

In step II.) of the process, propylene, 1-butene and ethylene are fed into the first gas phase reactor (GPR1), where the first propylene polymer fraction (A1) has been previously placed, to prepare the second propylene polymer fraction (A2). The two propylene polymer fractions (A1) and (A2) form the propylene copolymer (A).

The propylene copolymer (A) is placed in a second gas phase reactor (GPR2), and propylene, ethylene and optionally 1-butene are added in step III.) of the process, to prepare the heterophasic polypropylene composition. The process may further comprise blending the heterophasic composition with additives, extruding and/or pelletizing the heterophasic composition.

Generally, polymers produced in a multi-stage process are also designated as '*in-situ*' blends. The resulting end product consists of an intimate mixture of the polymers from the three or more reactors. These three or more polymers may have different molecular weight distribution curves, and/or they may differ in terms of comonomer content or type. The end product thus contains a mixture of three or more polymers with differing properties, i.e., it is a multimodal polymer mixture.

The first polymerization stage for producing the first propylene polymer fraction (A1) is preferably a slurry polymerization step. The slurry polymerization usually takes place in a liquid mixture of the employed monomers, preferably without the presence of an inert diluent, like a hydrocarbon diluent.

The temperature in the first polymerization stage is typically from 60 to 100 °C, preferably from 60 to 80 °C. An excessively high temperature should be avoided to prevent partial dissolution of the polymer into the liquid phase, the fouling of the reactor and early deactivation of the catalyst. The pressure is typically from 1 to 150 barg, preferably from 40 to 80 barg.

The slurry polymerization may be conducted in any known reactor used for slurry polymerization, such as any bulk phase reactor. Such reactors include a continuous stirred tank reactor and a loop reactor. It is especially preferred to conduct the polymerization in a loop reactor. In such reactors the slurry is circulated with a high velocity along a closed pipe by using a circulation pump. Loop reactors are generally known in the art and examples are given, for instance, in the patent applications US-A-4582816, US-A-3405109, US-A-3324093, EP-A-479186 and US-A-5391654. It is thus preferred to conduct the first polymerization stage as a slurry polymerization in a loop reactor.

The slurry may be withdrawn from the reactor either continuously or intermittently. A preferred way of intermittent withdrawal is the use of settling legs where the slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the polymer. The amount of hydrogen needed to reach the desired $MFR_2$ depends on the catalyst used and the polymerization conditions, as will be appreciated by the skilled worker.

The average residence time in the first polymerization stage is typically from 20 to 120 minutes, preferably from 30 to 80 minutes. As it is well known in the art the average residence time $\tau$ can be calculated from equation (2) below:

$$\tau = \frac{V_R}{Q_o} \qquad \text{equation (2)}$$

wherein

$V_R$ is the volume of the reaction space (in case of a loop reactor, the volume of the reactor, in case of the fluidized bed reactor, the volume of the fluidized bed),

$Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the propylene feed rate.

The first propylene polymer fraction (A1) is transferred to the second polymerization stage for producing the second propylene polymer fraction (A2) in a gas phase polymerization step, i.e., carried out in a first gas-phase reactor (GPR1). Any suitable gas phase reactor known in the art may be used, such as a fluidized bed gas phase reactor.

For gas phase reactors, the reaction temperature used will generally be in the range 60 to 115 °C (e.g. 70 to 110 °C), the reactor pressure will generally be in the range 10 to 25 barg, and the residence time will generally be 1 to 8 hours. The gas used will commonly be a non-reactive gas such as nitrogen or low boiling point hydrocarbons such as propane together with monomer.

A chain transfer agent (e.g., hydrogen) is typically added to the second polymerization stage.

In the first gas-phase reactor (GPR1), a mixture of the first propylene polymer fraction (A1) and the second propylene polymer fraction (A2) is formed being the propylene copolymer (A).

The propylene copolymer (A) is transferred to the third polymerization stage for producing the propylene ethylene elastomer (B) in a gas phase polymerization step, i.e., carried out in a second gas-phase reactor (GPR2). Any suitable gas phase reactor known in the art may be used, such as a fluidized bed gas phase reactor. The condition range described above for the first gas phase reactor are similarly used for the second gas phase reactor.

A preferred multistage process is the above-identified slurry-gas phase process, such as developed by Borealis and known as the Borstar® technology. In this respect, reference is made to the European patent applications EP-A-0887379 and EP-A-0517868.

The process may comprise one or more further polymerization stage(s)/step(s). Particularly preferred is a prepolymerization step, which precedes the polymerization step I.).

The purpose of the prepolymerization is to polymerize a small amount of polymer onto the catalyst at a low temperature and/or a low monomer concentration. By prepolymerization, it is possible to improve the performance of the catalyst in slurry and/or modify the properties of the final polymer. The prepolymerization step is typically conducted in slurry.

Thus, the prepolymerization step may be conducted in a loop reactor. The prepolymerization is again preferably conducted in liquid propylene, without the presence of an inert diluent, like a hydrocarbon diluent.

The temperature in the prepolymerization step is typically from 0 to 60 °C, preferably from 10 to 50 °C and more preferably from 15 to 40 °C.

The pressure is not critical and is typically from 1 to 150 barg, preferably from 40 to 80 barg.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. In such cases it is necessary to introduce as much cocatalyst into the prepolymerization stage that a sufficient polymerization reaction is obtained therein.

It is understood within the scope of the invention, that the amount of polymer produced in the prepolymerization typically lies within 1.0 to 5.0 wt.-%, based on the total weight of the heterophasic propylene composition.

The heterophasic polymer composition is preferably obtained by a polymerization process using a Ziegler-Natta catalyst. In a preferred embodiment, a Ziegler-Natta catalyst is used in all stages of the polymerization process.

Preferably, the Ziegler-Natta catalyst comprises:

a) compound(s) of a transition metal of Group 4 to 6 of IUPAC;

b) a Group 2 metal compound;

c) an internal donor, wherein said internal donor is a non-phthalic compound, preferably is a non-phthalic acid ester;

d) a co-catalyst; and

e) optionally an external donor.

The internal donor is preferably selected from (di)esters of non-phthalic carboxylic (di)acids, 1,3-diethers, derivatives and mixtures thereof. Most preferred internal donors are (di)esters of citraconic acid.

Preferably, the Ziegler-Natta catalyst does not comprise phthalic acid esters, and the heterophasic polypropylene composition is free of phthalic acid esters and their respective decomposition products.

Suitable Ziegler-Natta catalysts for use in the above-described polymerization reactions and preparation thereof are described in EP-A-3562850.

It will be appreciated that the propylene polymers may contain standard polymer additives as described above.

After preparation, the obtained polymer is typically extruded and pelletized. The extrusion may be conducted in the manner generally known in the art, preferably in a twin screw extruder. One example of suitable twin screw extruders is a corotating twin screw extruder. Those are manufactured, among others, by Coperion or Japan Steel Works. Another example is a counter-rotating twin screw extruder. Such extruders are manufactured, among others, by Kobe Steel and Japan Steel Works. Before the extrusion at least part of the desired additives, as mentioned above, are preferably mixed with the polymer. The extruders typically include a melting section where the polymer is melted and a mixing section where the polymer melt is homogenized. Melting and homogenization are achieved by introducing energy into the polymer. Suitable level of specific energy input (SEI) is from about 150 to about 450 kWh/ton polymer, preferably from 175 to 350 kWh/ton.

### *Article and use*

The present invention also relates to an article comprising the heterophasic polypropylene composition according to the invention in any of the above-described embodiments, and to the use of the heterophasic polypropylene composition for the manufacture of an article. Preferable articles include films and molded articles.

The articles according to the invention may be employed in a number of end applications, in particular food and non-food packaging applications as well as medical packaging applications.

As used herein the term '*molded article*' denotes an article that is produced by any conventional molding technique, e.g., injection molding, extrusion blow molding, stretch molding, compression molding, rotomolding or injection stretch blow molding. Articles produced by injection molding, extrusion blow molding, or injection stretch blow molding are preferred. Articles produced by extrusion blow molding are especially preferred. The molded articles preferably are thin-walled articles having a wall thickness of 300 $\mu$m to 2 mm. More preferably, the thin-walled articles have a wall thickness of 300 $\mu$m to 1400 $\mu$m, and even more preferably the thin-walled articles have a wall thickness of 500 $\mu$m to 900 $\mu$m. The molded articles of the present invention can be containers, such as bottles, canisters, wide-mouth containers, jars, or the like.

The films may be prepared by any method known in the art, such as cast film extrusion or blown film extrusion, the latter being preferred. The films may be multilayer or monolayer films, with the core layer consisting of the heterophasic polypropylene composition according to the invention. Preferably, the films are non-oriented films. In one embodiment, the films are monolayer films consisting of the heterophasic polypropylene composition according to the invention as the sole polymer component.

Generally, the films are characterized by a good balance between mechanical and optical properties.

Preferably, the article is a film, more preferably a non-oriented film, having a tensile modulus (TM) in machine direction (MD) and/or transverse direction (TD), determined according to ISO 527-3 on a film with a thickness of 50 $\mu$m, in the range of from 250 to 500 MPa, more preferably from 260 to 450 MPa and most preferably from 270 to 420 MPa.

Preferably, the article is a film, more preferably a non-oriented film, having a seal initiation temperature (SIT) at 5 N force, determined according to ASTM F 2029 and ASTM F 88 on a film with a thickness of 50 $\mu$m, in the range of from 90 to 120 C, more preferably from 92 to 115 C and most preferably from 95 to 110 C.

Preferably, the article is a film, more preferably a non-oriented film, having a dart drop impact (DDI), determined according to ASTM D1709 - Method A on a film with a thickness of 50 $\mu$m, in the range of from 300 to 700 g, more preferably from 325 to 675 g and most preferably from 350 to 650 g.

Preferably, the article is a film, more preferably a non-oriented film, having a haze value, determined according to ASTM D 1003 on a film with a thickness of 50 $\mu$m, in the range of from 3 to 25 %, more preferably from 3 to 22 % and most preferably from 3 to 20 %.

Preferably, the article is a film, more preferably a non-oriented film, having an opto-mechanical ability (OMA), determined as

$$OMA = TM(MD) * DDI / haze\ value,$$

in the range of from 5.000 to 30.000, more preferably from 7.000 to 27.000 and most preferably from 10.000 to 25.000.

**Measurement methods**

All parameters mentioned in the description of the invention or the examples were measured according to the methods described below.

*Melt Flow Rate*

The melt flow rate (MFR) was determined according to ISO 1133 and is indicated in g/10 min. The MFR is an indication of the melt viscosity of the polymer. The MFR is determined at 190 °C for PE and 230 °C for PP. The load under which the melt flow rate is determined is usually indicated as a subscript, for instance $MFR_2$ is measured under 2.16 kg load (condition D).

*Description of microstructure quantification by NMR spectroscopy*

Quantitative nuclear-magnetic resonance (NMR) spectroscopy was used to quantify the comonomer content of the polymers.

Quantitative $^{13}C\{^1H\}$ NMR spectra were recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3s {pollard04, klimke06} and the RS-HEPT decoupling scheme {fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm and assignments done according {brandolini01, randall89, resconi00}.

Characteristic signals corresponding to the incorporation of 1-butene were observed and the comonomer content quantified in the following way. The amount isolated 1-butene incorporated in PBP sequences was quantified using the integral of the $\alpha$B2 sites at 43.6 ppm accounting for the number of reporting sites per comonomer:

$$B = I_{\alpha B2} / 2$$

If observed the amount consecutively incorporated 1-butene in PBBP sequences was quantified using the integral of the $\alpha\alpha$B2 site at 40.6 ppm accounting for the number of reporting sites per comonomer:

$$BB = 2 * I_{\alpha\alpha B2}$$

In case of presence of consecutively incorporated 1-butene (BB) the isolated incorporated butene (B) needs to be corrected due to influencing signals by subtracting BB/2.

Characteristic signals corresponding to different incorporations of ethylene were observed and the comonomer content quantified utilising following assignments and equations for the respective sequences:

| chemical       shift [ppm] | assignment |
|---|---|
| 47.9 - 45.1 | S$\alpha\alpha$ |
| 30.1 | S$\gamma\delta$ |
| 29.7 | S$\delta\delta$ |
| 27.7 - 26.5 | S$\beta\delta$ |
| 25.1 - 23.9 | S$\beta\beta$ |

| sequence | signal / equation |
|---|---|
| E | I$s_{\beta\beta}$ |
| EE | I$s_{\beta\delta}$ |
| EEE | I$_{(S\delta\delta/2) + (S\gamma\delta/4)}$ |

The amount of P was quantified based on the S$\alpha\alpha$ methylene site including additional propene units not covered by S$\alpha\alpha$:

$$P = I_{S\alpha\alpha} + B + (0.5*BB) + E + (0.5*EE)$$

The total amount of comonomers was then calculated as follows:

$$B_{total} = B + BB \qquad E_{total} = E + EE + EEE \qquad P_{total} = P$$

$$B[mol\%] = 100* B_{total} / (B_{total} + E_{total} + P_{total})$$

$$E[mol\%] = 100* E_{total} / (B_{total} + E_{total} + P_{total})$$

$$P[mol\%] = 100* P_{total} / (B_{total} + E_{total} + P_{total})$$

The weight percent comonomer incorporation was calculated from the mol%:

B [wt%] = 100*(B[mol%]*56.11) / ((E[mol%] *28.05) + (B[mol%] *56.11) + (P[mol%]*42.08))

E [wt%] = 100*(E[mol%]*28.05) / ((E[mol%] *28.05) + (B[mol%] *56.11) + (P[mol%]*42.08))

For e.g. xylene soluble fraction where butene was not observed the related equations collapse to the following:

$$P= Is_{\alpha\alpha} + E + (0.5*EE)$$

The total amount of comonomer was then calculated as follows:

$$E_{total} = E + EE + EEE \qquad P_{total} = P$$

$$E[mol\%] = 100* E_{total} / (E_{total} + P_{total})$$

$$P[mol\%] = 100* P_{total} / (E_{total} + P_{total})$$

The weight percent comonomer incorporation was calculated from the mol%:

E [wt%] = 100*(E[mol%]*28.05) / ((E[mol%] *28.05) + (P[mol%]*42.08))

References

klimke06: Klimke, K., Parkinson, M., Piel, C., Kaminsky, W., Spiess, H.W., Wilhelm, M., Macromol. Chem. Phys. 2006;207:382.

parkinson07: Parkinson, M., Klimke, K., Spiess, H.W., Wilhelm, M., Macromol. Chem. Phys. 2007;208:2128.

pollard04: Pollard, M., Klimke, K., Graf, R., Spiess, H.W., Wilhelm, M., Sperber, O., Piel, C., Kaminsky, W., Macromolecules 2004;37:813.

filip05: Filip, X., Tripon, C., Filip, C., J. Mag. Resn. 2005, 176, 239

griffin07: Griffin, J.M., Tripon, C., Samoson, A., Filip, C., and Brown, S.P., Mag. Res. in Chem. 2007 45, S1, S198

castignolles09: Castignolles, P., Graf, R., Parkinson, M., Wilhelm, M., Gaborieau, M., Polymer 50 (2009) 2373

resconi00: Resconi, L., Cavallo, L., Fait, A., Piemontesi, F., Chem. Rev. 2000, 100, 1253

randall89: J. Randall, Macromol. Sci., Rev. Macromol. Chem. Phys. 1989, C29, 201.

brandolini01: A.J. Brandolini, D.D. Hills, "NMR spectra of polymers and polymer additives", Marcel Leker Inc., 2000

abis86: L. Abis, Mackromol. Chem. 187, 1877-1886 (1986)

*Molecular weight and molecular weight distribution*

Molecular weight averages ($M_z$, $M_w$ and $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x M_i)}{\sum_{i=1}^{N} A_i} \quad (2)$$

$$M_z = \frac{\sum_{i=1}^{N} (A_i x M_i^2)}{\sum_{i=1}^{N} (A_i/M_i)} \quad (3)$$

For a constant elution volume interval $\Delta V_i$, where Ai, and Mi are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5) from PolymerChar (Valencia, Spain) or differential refractometer (RI) from Agilent Technologies, equipped with 3× Agilent-PLgel Olexis and 1× Agilent-PLgel Olexis Guard columns was used. As the solvent and mobile phase 1,2,4-trichlorobenzene (TCB) stabilized with 250 mg/L 2,6-Di-tert-butyl-4-methylphenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0.5 kg/mol to 11500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \ mL/g, \qquad \alpha_{PS} = 0.655$$

$$K_{PE} = 39 \times 10^{-3} \ mL/g, \qquad \alpha_{PE} = 0.725$$

$$K_{PP} = 19 \times 10^{-3} \ mL/g, \qquad \alpha_{PP} = 0.725$$

A third order polynomial fit was used to fit the calibration data.

All samples were prepared in the concentration range of 0.5 to 1 mg/ml and dissolved at 160 °C for 2.5 hours (PP) or 3 hours (PE) under continuous gentle shaking.

*Flexural Modulus (FM)*

The flexural modulus was determined in a 3-point-bending test at 23 °C according to ISO 178 on 80x10x4 mm³ test bars injection molded in line with ISO 1873-2.

*Differential scanning calorimetry (DSC)*

Differential scanning calorimetry (DSC) analysis, melting temperature ($T_m$), melt enthalpy ($H_m$) and crystallization temperature ($T_c$) were measured with a TA Instrument Q200 differential scanning calorimetry (DSC) on 5 to 7 mg samples. DSC was run according to ISO 11357 / part 3 / method C2 in a heat/cool/heat cycle with a scan rate of 10 °C/min in the temperature range of -30 to +225 °C. Crystallization temperature ($T_c$) was determined from the cooling step, while melting temperature ($T_m$) and melt enthalpy ($H_m$) were determined from the second heating step.

Throughout the present description, the term $T_m$ is understood as peak temperature of melting as determined by DSC at a heating rate of 10 K/min.

Throughout the present description, the term $T_c$ is understood as peak temperature of crystallization as determined by DSC at a cooling rate of 10 K/min.

*Notched Impact Strength (NIS)*

The Charpy notched impact strength (NIS) was measured according to ISO 179 1eA at +23 °C or at -20 °C, respectively, using injection molded bar test specimens of 80x10x4 mm$^3$ prepared in accordance with ISO 1873-2.

*Xylene soluble fraction (XS) and xylene insoluble fraction (XI)*

The xylene soluble fraction (XS) and xylene insoluble fraction (XI) were determined according to ISO 16152 at 25 °C.

*Intrinsic viscosity (IV)*

The IV of the xylene solubles was measured at 135 °C in decalin according to ISO 1628-1 & 3.

*Tensile modulus (TM)*

The tensile modulus of the films (TM) in machine direction (MD) and/or transverse direction (TD) was determined according to ISO 527-3 on blown films with a thickness of 50 μm.

*Seal initiation temperature (SIT)*

The seal initiation temperature (SIT) at 5 N force of the films was determined according to ASTM F 2029 and ASTM F 88 on blown films with a thickness of 50 μm.

*Dart drop impact (DDI)*

The dart drop impact (DDI) of the films was determined according to ASTM D 1709 - Method A on blown films with a thickness of 50 μm.

*Haze*

The haze value of the films was determined according to ASTM D 1003 on blown films with a thickness of 50 μm.

*Opto-mechanical ability (OMA)*

The opto-mechanical ability (OMA) of the films was determined as

$$OMA = TM(MD) * DDI / haze\ value,$$

using the values obtained for the respective parameters as described above.

**Examples**

*Preparation of the heterophasic polypropylene composition*

A heterophasic polypropylene composition according to the invention was prepared as Inventive Example IE1 in a multi-stage polymerization process as described above, under the conditions outlined in Table 1. The catalyst was a Ziegler-Natta catalyst prepared as described in EP-A-3562850. The solid catalyst component was used along with triethylaluminium (TEAL) as co-catalyst and dicyclo pentyl dimethoxy silane (D-donor) as external donor.

Additionally, Comparative Examples CE1 and CE2 were prepared. The process for the preparation of Comparative Examples CE2 contained the similar number of stages as the process for the preparation of the Inventive Example IE1, while the process for the preparation of Comparative Example CE1 did not comprise the third polymerization stage (i.e. in GPR2). Accordingly, Comparative Example CE1 does not contain the propylene ethylene elastomer (B).

For comparative example CE3, which is a pure random-heterophasic copolymer comprising only propylene and ethylene, the same catalyst and process was used.

*Table 1: Process conditions*

| Prepoly reactor | IE1 | CE1 | CE2 | CE3 |
|---|---|---|---|---|
| Temperature [°C] | 20 | 20 | 20 | 30 |
| TEAL/C3 [g/t] | 172 | 171 | 172 | 150 |
| Donor/C3 [g/t] | 60 | 60 | 60 | 50 |
| Pressure reactor [barg] | 52 | 52 | 53 | 60 |
| $H_2/C_3$ ratio [mol/kmol] | 0.68 | 0.69 | 0.68 | 0.0 |
| **Loop reactor (A1)** | | | | |
| Temperature [°C] | 68 | 68 | 68 | 80 |
| Pressure reactor [barg] | 52 | 52 | 52 | 60 |
| $H_2/C_3$ ratio [mol/kmol] | 0.62 | 0.62 | 0.60 | 0.05 |
| $C_2/C_3$ ratio [mol/kmol] | 4.16 | 4.16 | 4.07 | 6.5 |
| $C_4/C_3$ ratio [mol/kmol] | 42.5 | 42.5 | 42.4 | 0.0 |
| $C_4$ content [wt.-%] | 6.9 | 6.9 | 6.9 | 0.0 |
| $C_2$ content [wt.-%] | 1.2 | 1.3 | 1.2 | 2.5 |
| Split [wt.-%] | 39 | 51 | 50 | 47 |
| $MFR_2$ (230°C) [g/10 min] | 1.5 | 2.5 | 2.3 | 0.7 |
| XS [wt.-%] | 4.9 | 4.5 | 5.2 | 5.0 |
| **Gas phase reactor 1 (A2, A)** | | | | |
| Temperature [°C] | 78 | 78 | 78 | 80 |
| Pressure reactor [barg] | 18 | 18 | 18 | 20 |
| $H_2/C_3$ ratio [mol/kmol] | 2.49 | 2.63 | 2.51 | 0.50 |
| $C_4/C_3$ ratio [mol/kmol] | 186.9 | 191.2 | 157.1 | 0.0 |
| $C_2/C_3$ ratio [mol/kmol] | 17.2 | 17.0 | 17.2 | 27.4 |
| Split [wt.-%] | 41 | 49 | 44 | 36 |
| $MFR_2$ (230 °C) [g/10 min] | 1.5 | 1.6 | 1.7 | 0.7 |
| $C_4$ content [wt.-%] | 8.1 | 8.5 | 8.1 | 0.0 |
| $C_2$ content [wt.-%] | 1.8 | 1.8 | 1.8 | 4.2 |
| $C_4$ content in GPR1 [wt.-%] | 9.8 | 10.1 | 9.6 | 0.0 |
| $C_2$ content in GPR1 [wt.-%] | 2.4 | 1.3 | 2.5 | 5.9 |
| XS [wt.-%] | 9.3 | 12.4 | 9.8 | 10.1 |
| **Gas phase reactor 2 (B)** | | | | |
| Temperature [°C] | 75 | | 75 | 75 |
| Pressure reactor [barg] | 18 | | 18 | 18 |
| $H_2/C_2$ ratio [mol/kmol] | 201.9 | | 2.1 | 280 |
| $C_4/C_3$ ratio [mol/kmol] | 0.0 | | 0.0 | 0.0 |
| $C_2/C_3$ ratio [mol/kmol] | 387 | | 102 | 350 |
| $C_4$ content [wt.-%] | 6.5 | | 7.6 | 0.0 |
| $C_2$ content [wt.-%] | 10.0 | | 2.9 | 10.2 |
| $C_4$ content in GPR2 [wt.-%] | 0.0 | | 0.0 | 0.0 |
| $C_2$ content in GPR2 [wt.-%] | 43.0 | | 27.0 | 40.5 |

(continued)

| Prepoly reactor | IE1 | CE1 | CE2 | CE3 |
|---|---|---|---|---|
| Split [wt.-%] | 20 | | 6 | 17 |
| MFR$_2$ (230 °C) [g/10 min] | 1.5 | 1.6 | 0.7 | 0.5 |
| XS [wt.-%] | 28.2 | 12.4 | 19.7 | 21.8 |

The polymers prepared above were mixed with 0.25 wt.-% of Irganox B215 (a synergistic 2:1 blend of antioxidants Irgafos 168 (tris(2,4-ditertbutylphenyl)phosphite, CAS No: 31570-04-4) and Irganox 1010 (pentaerythritol tetrakis[3-[3,5-di-tert-butyl-4-hydroxyphenyl]propionate], CAS No: 6683-19-8, commercially available from BASF SE, Germany) and 0.05 wt.- % of CEASIT FI (Ca-stearate, CAS No: 1592-23-0, commercially available from Baerlocher GmbH, Germany), and then compounded in a twin screw extruder ZSK 18, with melt temperature of 200-220 °C and throughput of 7 kg/h.

*Properties of the heterophasic polypropylene composition*

Properties of the polymer compositions were measured and are summarized in Table 2 below.

*Table 2: Properties of the polymer compositions*

| | Unit | IE1 | CE1 | CE2 | CE3 |
|---|---|---|---|---|---|
| MFR$_2$ (230°C) | g/10 min | 1.5 | 1.6 | 0.7 | 0.5 |
| C$_4$ content | wt. -% | 6.5 | 8.5 | 7.6 | 0.0 |
| C$_2$ content | wt. -% | 10.0 | 1.8 | 2.9 | 10.2 |
| XS | wt. -% | 28.8 | 12.4 | 19.7 | 21.8 |
| IV (XS) | dl/g | 2.14 | 1.93 | 3.58 | 2.70 |
| C$_3$ content (XS) | wt. -% | 70.1 | 80.0 | 81.1 | 68.7 |
| C$_2$ content (XS) | wt. -% | 27.2 | 6.5 | 10.6 | 31.3 |
| C$_4$ content (XS) | wt. -% | 2.7 | 13.5 | 8.3 | 0.0 |
| C$_2$ content (XI) | wt. -% | 1.5 | 1.0 | 1.4 | 4.4 |
| C$_4$ content (XI) | wt. -% | 7.5 | 8.0 | 7.2 | 0.0 |
| C$_4$ content (XI) - C$_4$ content (XS) | wt. -% | 4.8 | -5.5 | -1.1 | -4.4 |
| T$_m$ | °C | 138 | 137 | 138 | 140 |
| T$_c$ | °C | 95 | 97 | 94 | 96 |
| Flexural Modulus | MPa | 427 | 602 | 473 | 514 |
| Charpy NIS (+23°C) | kJ/m$^2$ | 86.3 | 38.3 | 84.5 | 72.0 |
| Charpy NIS (-20°C) | kJ/m$^2$ | 2.1 | 1.2 | 2.1 | 2.0 |

*Preparation of films*

The polymer compositions were used to prepare blow films of 50 $\mu$m thickness.
Collin 30 BF line was used according to standard procedures with a blow up ratio (BUR) of 1:2.5. The melt temperature was 215 °C, uptake speed was
6.2 m/min.
Properties of the films are summarized in Table 3 below.

*Table 3: Properties of the films*

| | Unit | IE1 | CE1 | CE2 | CE3 |
|---|---|---|---|---|---|
| Tensile modulus (MD) | MPa | 363 | 596 | 493 | 576 |

(continued)

| | Unit | IE1 | CE1 | CE2 | CE3 |
|---|---|---|---|---|---|
| Tensile modulus (TD) | MPa | 355 | 607 | 442 | 574 |
| Seal initiation temperature (SIT) | °C | 109 | 114 | 109 | n.d. |
| Dart drop impact (DDI) | g | 537 | 105 | 297 | 127 |
| Haze | % | 13.6 | 24.8 | 46.0 | 28.0 |
| Opto-mechanical ability (OMA) | - | 14333 | 2523 | 3183 | 2613 |

All examples have good mechanical properties in terms of tensile modulus. However, the Inventive Example IE1 show very high dart drop impact that is 5 times higher than that of Comparative Example CE1 and 80 % higher than that of Comparative Example CE2.

The Inventive Example IE1 is characterized by relatively low haze. The combination of these advantageous properties leads to much improved opto-mechanical ability compared to the comparative examples.

Further, the seal initiation temperature of Inventive Example IE1 is also sufficiently low for good sealing properties.

**Claims**

1. A heterophasic polypropylene composition comprising a propylene copolymer (A) matrix of propylene with ethylene and 1-butene comonomer units and a propylene ethylene elastomer (B) dispersed within the matrix, the heterophasic polypropylene composition comprising

   a) 55 to 85 wt.-%, based on the total weight of the heterophasic polypropylene composition and determined at 25 °C according to ISO 16152, of a xylene insoluble fraction (XI) comprising propylene comonomer units and, based on the total weight of the xylene insoluble fraction (XI), ethylene comonomer units in a content in the range of from 0.5 to 3.0 wt.-% and 1-butene comonomer units in a content in the range of from 5.0 to 10.0 wt.-%, and
   b) 15 to 45 wt.-%, based on the total weight of the heterophasic polypropylene composition and determined at 25 °C according to ISO 16152, of a xylene soluble fraction (XS) comprising propylene comonomer units and, based on the total weight of the xylene soluble fraction (XS), ethylene comonomer units in a content in the range of from 18.0 to 50.0 wt.-% and 1-butene comonomer units in a content in the range of from 1.0 to 10.0 wt.-%, and the xylene soluble fraction (XS) having an intrinsic viscosity IV, determined according to ISO 1628-1 & 3, in the range of from 1.2 to 3.0 dl/g; and
   wherein the content of 1-butene comonomer units, based on the total weight of the respective fraction (XI or XS), is more than 3.0 wt.-% higher in the xylene insoluble fraction (XI) compared to the xylene soluble fraction (XS), and wherein the heterophasic polypropylene composition has:

   i.) a melt flow rate $MFR_2$ (230 °C), determined according to ISO 1133, in the range of from 0.5 to 5.0 g/10 min, and
   ii.) a melting temperature $T_m$, determined according to differential scanning calorimetry (DSC) described in the specification, in the range of from 125 to 145 °C.

2. The heterophasic polypropylene composition according to claim 1, wherein the heterophasic polypropylene composition comprises, based on the total weight of the heterophasic polypropylene composition and determined by $^{13}$C-NMR spectroscopy, a content of 1-butene comonomer units in the range of from 3.0 to 14.0 wt.-%, and/or a content of ethylene comonomer units in the range of from 3.0 to 15.0 wt.-%.

3. The heterophasic polypropylene composition according to any one of the preceding claims, wherein the heterophasic polypropylene composition comprises

   a) 65 to 85 wt.-%, based on the total weight of the heterophasic polypropylene composition and determined at 25 °C according to ISO 16152, of the xylene insoluble fraction (XI), and
   b) 15 to 35 wt.-%, based on the total weight of the heterophasic polypropylene composition and determined at 25 °C according to ISO 16152, of the xylene soluble fraction (XS).

4. The heterophasic polypropylene composition according to any one of the preceding claims, wherein the heterophasic polypropylene composition is free of phthalic acid esters and their respective decomposition products.

5. The heterophasic polypropylene composition according to any one of the preceding claims, wherein the propylene copolymer (A) is a multimodal propylene copolymer, and/or the propylene ethylene elastomer (B) is a unimodal propylene copolymer.

6. The heterophasic polypropylene composition according to any one of the preceding claims, wherein the propylene copolymer (A) comprises two different propylene polymer fractions:

   a) 30 to 70 wt.-%, based on the total weight of the propylene copolymer (A), of a first propylene polymer fraction (A1) being a propylene copolymer of propylene with ethylene comonomer units and 1-butene comonomer units, and
   b) 30 to 70 wt.-%, based on the total weight of the propylene copolymer (A), of a second propylene polymer fraction (A2), being a propylene copolymer of propylene with ethylene comonomer units and 1-butene comonomer units.

7. The heterophasic polypropylene composition according to any one of the preceding claims, wherein the heterophasic polypropylene composition has at least one of the following properties:

   a) a flexural modulus, determined according to ISO 178, in the range of from 250 to 500 MPa, and/or
   b) an impact strength at +23 °C, determined according to ISO 179/1eA, in the range of from 30.0 to 100.0 kJ/m$^2$, and/or
   c) an impact strength at -20 °C, determined according to ISO 179/1eA, in the range of from 1.5 to 7.0 kJ/m$^2$, and/or
   d) a crystallization temperature $T_c$, determined according to differential scanning calorimetry (DSC) described in the specification, in the range of from 90 to 100 °C.

8. A process for the preparation of the heterophasic polypropylene composition according to any one of the preceding claims by a multi-stage polymerization process, comprising

   I.) preparing a first propylene polymer fraction (A1) being a propylene copolymer of propylene with ethylene comonomer units and 1-butene comonomer units in a bulk phase reactor, preferably a loop reactor, in a first polymerization stage in the presence of a Ziegler-Natta catalyst;
   II.) transferring the first propylene polymer fraction (A1) to a second polymerization stage and preparing a second propylene polymer fraction (A2) being a propylene copolymer of propylene with ethylene comonomer units and 1-butene comonomer units in the presence of a Ziegler-Natta catalyst in a first gas phase reactor (GPR1); and wherein the first propylene polymer fraction (A1) and the second propylene polymer fraction (A2) together form a propylene copolymer (A); and
   III.) transferring the propylene copolymer (A) to a third polymerization stage and preparing a propylene ethylene elastomer (B) as a third propylene polymer fraction in the presence of a Ziegler-Natta catalyst in a second gas phase reactor (GPR2), to obtain a heterophasic polypropylene composition.

9. The process according to claim 8, wherein the Ziegler-Natta catalyst comprises:

   a) compound(s) of a transition metal of Group 4 to 6 of IUPAC;
   b) a Group 2 metal compound;
   c) an internal donor, wherein said internal donor is a non-phthalic compound, preferably is a non-phthalic acid ester;
   d) a co-catalyst; and
   e) optionally an external donor.

10. The process according to claim 9, wherein the internal donor is preferably selected from (di)esters of non-phthalic carboxylic (di)acids, 1,3-diethers, derivatives and mixtures thereof.

11. An article comprising the heterophasic polypropylene composition according to any one of claims 1 to 7, preferably being a film or a molded article.

12. The article according to claim 11, wherein the article is a non-oriented film having at least one of the following properties, determined on a film with a thickness of 50 $\mu$m :

a) a tensile modulus (TM) in machine direction (MD) and/or transverse direction (TD), determined according to ISO 527-3, in the range of from 250 to 500 MPa, and/or
b) a seal initiation temperature (SIT) at 5 N force, determined according to ASTM F2029 and ASTM F88, in the range of from 90 to 120 °C, and/or
c) a dart drop impact (DDI), determined according to ASTM D 1709 - Method A, in the range of from 300 to 700 g, and/or
d) a haze value, determined according to ASTM D 1003, in the range of from 3 to 25 %, and/or
e) an opto-mechanical ability (OMA), determined as

$$OMA = TM(MD) * DDI / haze\ value,$$

in the range of from 5.000 to 30.000.

13. Use of the heterophasic polypropylene composition according to any one of claims 1 to 7 for the manufacture of an article, preferably being a film or a molded article.

Europäisches
Patentamt

European
Patent Office

Office européen
des brevets

# EUROPEAN SEARCH REPORT

Application Number

EP 23 18 1507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/209326 A1 (BOREALIS AG [AT]) 21 October 2021 (2021-10-21) * TERHECO-1 * * claims 1-14 * | 1-13 | INV. C08F210/06 C08L23/14 |
| A | EP 2 143 760 B1 (BOREALIS AG [AT]) 9 March 2011 (2011-03-09) * Comparative Example 1 * * claims 1-17 * | 1-13 | |
| A | US 6 342 564 B1 (PITKAENEN PAEIVI [FI] ET AL) 29 January 2002 (2002-01-29) * example 3 * * claims 1-25 * | 1-13 | |

|  | TECHNICAL FIELDS SEARCHED (IPC) |
|---|---|
|  | C08F C08L |

The present search report has been drawn up for all claims

| Place of search | Date of completion of the search | Examiner |
|---|---|---|
| Munich | 30 November 2023 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 484 456 A1**

ANNEX TO THE EUROPEAN SEARCH REPORT
ON EUROPEAN PATENT APPLICATION NO.

EP 23 18 1507

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2023

| Patent document cited in search report | | Publication date | Patent family member(s) | | Publication date |
|---|---|---|---|---|---|
| WO 2021209326 | A1 | 21-10-2021 | BR | 112022020713 A2 | 29-11-2022 |
| | | | CN | 115397872 A | 25-11-2022 |
| | | | EP | 4136129 A1 | 22-02-2023 |
| | | | US | 2023212338 A1 | 06-07-2023 |
| | | | WO | 2021209326 A1 | 21-10-2021 |
| EP 2143760 | B1 | 09-03-2011 | AT | E501216 T1 | 15-03-2011 |
| | | | CN | 102089378 A | 08-06-2011 |
| | | | EP | 2143760 A1 | 13-01-2010 |
| | | | WO | 2010003953 A1 | 14-01-2010 |
| US 6342564 | B1 | 29-01-2002 | AT | E256714 T1 | 15-01-2004 |
| | | | AU | 8121198 A | 04-01-1999 |
| | | | BR | 9810290 A | 19-09-2000 |
| | | | CN | 1261390 A | 26-07-2000 |
| | | | DE | 69820626 T2 | 09-06-2004 |
| | | | EP | 0991719 A1 | 12-04-2000 |
| | | | ES | 2209159 T3 | 16-06-2004 |
| | | | JP | 4037468 B2 | 23-01-2008 |
| | | | JP | 2002508013 A | 12-03-2002 |
| | | | KR | 20010020493 A | 15-03-2001 |
| | | | US | 6342564 B1 | 29-01-2002 |
| | | | WO | 9859002 A1 | 30-12-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3126411 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- EP 0887379 A
- EP 0517868 A
- WO 9619503 A
- WO 9632420 A
- EP 3562850 A

### Non-patent literature cited in the description

- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45 (S1), S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **RESCONI, L.** ; **CAVALLO, L.** ; **FAIT, A.** ; **PIEMONTESI, F.** *Chem. Rev.*, 2000, vol. 100, 1253
- **J. RANDALL**. *Macromol. Sci., Rev. Macromol. Chem. Phys.*, 1989, vol. C29, 201
- **A.J. BRANDOLINI** ; **D.D. HILLS**. NMR spectra of polymers and polymer additives. Marcel Leker Inc., 2000
- **L. ABIS**. *Mackromol. Chem.*, 1986, vol. 187, 1877-1886
- *CHEMICAL ABSTRACTS*, 31570-04-4
- *CHEMICAL ABSTRACTS*, 6683-19-8
- *CHEMICAL ABSTRACTS*, 1592-23-0